# EUROPEAN PATENT APPLICATION

(11) **EP 3 021 605 A1**
(43) Date of publication of application: **18.05.2016**
(21) Application number: 14831987.4
(22) Date of filing: 01.08.2014
(51) Int. Cl.: H04W 12/06, H04W 12/08

(54) **METHOD, DEVICE AND SYSTEM FOR CONFIGURING MULTIPLE DEVICES**

(30) Priority: 01.08.2013 CN 201310332659
(71) Applicant: Huawei Device Co., Ltd., Longgang District Shenzhen Guangdong 518129 (CN)
(72) Inventor: LI, Xiaoxian, Shenzhen Guangdong 518129 (CN); DING, Zhiming, Shenzhen Guangdong 518129 (CN); LU, Su, Shenzhen Guangdong 518129 (CN); PANG, Gaokun, Shenzhen Guangdong 518129 (CN)
(74) Representative: Pfenning, Meinig & Partner mbB
(86) International application number: PCT/CN2014/083508
(87) International publication number: WO 2015/014307

(57) **Abstract**

Embodiments of the present invention provide a method, device and system for configuring multiple devices, where multiple devices are configured simply and securely in a centralized manner. This simplifies a configuration process and reduces a configuration time compared with the prior art in which when multiple devices needing to be added are configured, these devices needing to be added need to be configured one by one according to steps in the WPS specification. The method includes: acquiring, by a configuration device, device identity information, configuration password information, and network role attributes of at least two devices needing to be configured on a same wireless local area network WLAN; determining a central node device of the WLAN according to the network role attributes of the at least two devices; and sending device identity information and configuration password information of a non-central node device to the central node device, or sending, by the configuration device, device identity information and configuration password information of the central node device to the non-central node device.

## Description

This application claims priority to Chinese Patent Application No. 201310332659.2, filed with the Chinese Patent Office on August 1, 2013, which is incorporated herein by reference in its entirety.

### TECHNICAL FIELD

The present invention relates to the field of communications, and in particular, to a method, device and system for configuring multiple devices.

### BACKGROUND

Wireless fidelity (Wireless Fidelity, Wi-Fi for short) has advantages such as quick deployment, convenient use, and a high transmission rate, and is widely applied in various industries. However, security setup of a Wi-Fi network is complex, and therefore, many wireless network users do not configure any security parameter, and the network is very susceptible to attacks. To enable a user to use a wireless network securely and conveniently, the Wi-Fi Alliance launches a Wi-Fi protected setup (Wi-Fi Protected Setup, WPS for short) specification, which is also referred to as Wi-Fi simple configuration (Wi-Fi Simple Configuration, WSC for short), to perform security configuration on an accessed wireless terminal, so that a user who does not have much understanding on wireless setup and security may also set up a secure wireless local area network (Wireless Local Area Network, WLAN for short) simply and conveniently, and add a device (wireless terminal) to the network conveniently and securely.

In the WPS specification, an entity referred to as registrar (Registrar) is defined to complete configuration of a wireless terminal. A registrar may be placed inside a wireless access device, or may be placed outside a wireless access device. When a device is added to a network in which a wireless access device is located, if an internal registrar is to be used, a user needs to log in to a web (web) interface of the wireless access device, and then to enter a personal identification number (Personal Identification Number, PIN for short) code of the device. If an external registrar is to be used, a PIN code of the wireless access device first needs to be entered on a device that can provide an external registrar function, or a device that can serve as an external registrar, and after interacting with the wireless access device, the device becomes an external registrar of the wireless access device, or a configuration parameter needs to be set manually to make the device become a registrar of the wireless access device. Then, a user needs to enter, on the external registrar, the PIN code of the device needing to be added, or implements, in a configuration manner in the WPS protocol such as push button configuration (Push Button Configuration, PBC for short) or near field communication (Near Field Communication, NFC for short), configuration of the device needing to be added.

The inventor finds that the foregoing method for configuring a device has at least the following defect: when multiple devices needing to be added are configured, a user needs to configure these devices one by one according to steps in the existing WPS specification, which is troublesome and time-consuming.

### SUMMARY

Embodiments of the present invention provide a method, device and system for configuring multiple devices, so as to simply and securely configure multiple devices in a centralized manner.

To achieve the foregoing objective, the following technical solutions are adopted in the embodiments of the present invention:

According to a first aspect, an embodiment of the present invention provides a method for configuring multiple devices, including:
acquiring, by a configuration device, device identity information, configuration password information, and network role attributes of at least two devices needing to be configured on a same WLAN;
determining, by the configuration device, a central node device of the WLAN according to the network role attributes of the at least two devices; and
sending, by the configuration device, device identity information and configuration password information of a non-central node device to the central node device, so that the central node device securely connects to the non-central node device according to the device identity information and the configuration password information of the non-central device; or sending, by the configuration device, device identity information and configuration password information of the central node device to the non-central node device, so that the non-central node device securely connects to the central node device according to the device identity information and the configuration password information of the central node device, where
the non-central node device is a device of the at least two devices except the central node device.

In a first possible implementation manner, with reference to the first aspect, before the sending device identity information and configuration password information of a non-central node device to the central node device, the method further includes:
authenticating, by the configuration device, with the central node device according to configuration password information of the central node device; or
before the sending device identity information and configuration password information of the central node device to the non-central node device, the method further includes:
   authenticating, by the configuration device, with the non-central node device according to configuration password information of the non-central node device.

In a second possible implementation manner, with reference to the first aspect or the first possible implementation manner, the network role attribute of the device includes a device type and/or a group owner intent value of the device.

In a third possible implementation manner, with reference to the second possible implementation manner, the determining, by the configuration device, a central node device of the WLAN according to the network role attributes of the at least two devices includes:
if the configuration device determines, according to the device type in the network role attribute of the device, that the device type of the device is a wireless access point (Access Point, AP for short), using the device as the central node device of the WLAN.

In a fourth possible implementation manner, with reference to the second possible implementation manner, the determining, by the configuration device, a central node device of the WLAN according to the network role attributes of the at least two devices includes:
if the configuration device determines, according to the device type in the network role attribute of the device, that the devices needing to be configured on the same WLAN include no AP, determining, by the configuration device, the central node device of the WLAN according to the group owner intent value in the network role attribute of the device; or
determining, by the configuration device, the central node device of the WLAN according to the device type in the network role attribute and a preset correspondence between the device type and the group owner intent value.

According to a second aspect, an embodiment of the present invention provides a method for configuring multiple devices, including:
receiving, by a first device, device identity information and configuration password information of a second device that are sent by a configuration device after the configuration device acquires device identity information, configuration password information, and network role attributes of at least two devices that need to be configured on a same WLAN and that include the first device, and determines a central node device of the WLAN according to the network role attributes of the at least two devices; and
securely connecting, by the first device, to the another second device according to the device identity information and the configuration password information of the another second device, where
the first device is the central node device, and the second device is any device of the at least two devices except the central node device; or the second device is the central node device, and the first device is any device of the at least two devices except the central node device.

In a first possible implementation manner, with reference to the second aspect, when the first device is the central node device, authenticating, by the first device, with the configuration device according to configuration password information of the first device before the first device receives the device identity information and the configuration password information of the second device that are sent by the configuration device; or
when the second device is the central node device, authenticating, by the first device, with the configuration device according to configuration password information of the first device before the first device receives the device identity information and the configuration password information of the second device that are sent by the configuration device.

In a second possible implementation manner, with reference to the second aspect or the first possible implementation manner, the network role attribute of the device includes a device type and/or a group owner intent value of the device.

According to a third aspect, this embodiment provides a configuration device for configuring multiple devices, including:
an acquiring unit, configured to acquire device identity information, configuration password information, and network role attributes of at least two devices needing to be configured on a same WLAN;
a determining unit, configured to determine a central node device of the WLAN according to the network role attributes of the at least two devices; and
a sending unit, configured to send device identity information and configuration password information of the non-central node device to the central node device, so that the central node device securely connects to the non-central node device according to the device identity information and the configuration password information of the non-central device;
or
configured to send device identity information and configuration password information of the central node device to the non-central node device, so that the non-central node device securely connects to the central node device according to the device identity information and the configuration password information of the central node device, where
the non-central node device is a device of the at least two devices except the central node device.

In a first possible implementation manner, with reference to the third aspect, the configuration device further includes:
the network role attribute of the device includes a device type and/or a group owner intent value of the device.

In a second possible implementation manner, with reference to the first possible implementation manner, the determining unit is configured to: if the determining unit determines, according to the device type in the network role attribute of the device, that the device type of the device is an AP, use the device as the central node device of the WLAN.

In a third possible implementation manner, with reference to the first possible implementation manner, the determining unit is specifically configured to: if the determining unit determines, according to the device type in the network role attribute of the device, that the devices needing to be configured on the same WLAN include no AP, determine the central node device of the WLAN according to the group owner intent value in the network role attribute of the device;
or
the determining unit is specifically configured to determine the central node device of the WLAN according to the device type in the network role attribute and a preset correspondence between the device type and the group owner intent value.

According to a fourth aspect, an embodiment of the present invention provides a configuration device for configuring multiple devices, including:
a processor, configured to determine, based on acquired device identity information, configuration password information, and network role attributes of at least two devices needing to be configured on a same WLAN, a central node device of the WLAN; and
a transmitter, configured to send device identity information and configuration password information of a non-central node device to the central node device, so that the central node device securely connects to the non-central node device according to the device identity information and the configuration password information of the non-central device; or
configured to send device identity information and configuration password information of the central node device to the non-central node device, so that the non-central node device securely connects to the central node device according to the device identity information and the configuration password information of the central node device, where
the non-central node device is a device of the at least two devices except the central node device.

In a first possible implementation manner, with reference to the fourth aspect, the network role attribute of the device includes a device type and/or a group owner intent value of the device.

In a second possible implementation manner, with reference to the first possible implementation manner, the processor is specifically configured to: based on the acquired device identity information, configuration password information, and network role attributes of the at least two devices needing to be configured on the same WLAN,
if the processor determines, according to the device type in the network role attribute of the device, that the device type of the device is a wireless access point (AP), use the device as the central node device of the WLAN.

In a third possible implementation manner, with reference to the first possible implementation manner, the processor is specifically configured to: based on the acquired device identity information, configuration password information, and network role attributes of the at least two devices needing to be configured on the same WLAN,
if the processor determines, according to the device type in the network role attribute of the device, that the devices needing to be configured on the same WLAN include no AP, determine, by the configuration device, the central node device of the WLAN according to the group owner intent value in the network role attribute of the device; or
determine the central node device of the WLAN according to the device type in the network role attribute and a preset correspondence between the device type and the group owner intent value.

According to a fifth aspect, an embodiment of the present invention provides a first device for configuring multiple devices, including:
a receiving unit, configured to receive device identity information and configuration password information of a second device that are sent by a configuration device after the configuration device acquires device identity information, configuration password information, and network role attributes of at least two devices that need to be configured on a same WLAN and that include the first device, and determines a central node device of the WLAN according to the network role attributes of the at least two devices; and
a secure connection unit, configured to securely connect to the another second device according to the device identity information and the configuration password information of the another second device, where the first device is the central node device, and the second device is any device of the at least two devices except the central node device; or the second device is the central node device, and the first device is any device of the at least two devices except the central node device.

In a first possible implementation manner, with reference to the fifth aspect, the first device further includes:
an authentication unit, configured to: when the first device is the central node device, authenticate with the configuration device according to configuration password information of the first device before the receiving unit receives the device identity information and the configuration password information of the second device that are sent by the configuration device; or configured to: when the second device is the central node device, authenticate with the configuration device according to configuration password information of the first device before the receiving unit receives the device identity information and the configuration password information of the second device that are sent by the configuration device.

In a second possible implementation manner, with reference to the fifth aspect or the first possible implementation manner, the network role attribute of the device includes a device type and/or a group owner intent value of the device.

According to a sixth aspect, an embodiment of the present invention provides a first device for configuring multiple devices, including:
a receiver, configured to receive device identity information and configuration password information of a second device that are sent by a configuration device after the configuration device acquires device identity information, configuration password information, and network role attributes of at least two devices that need to be configured on a same WLAN and that include the first device, and determines a central node device of the WLAN according to the network role attributes of the at least two devices; and
a processor, configured to control, according to the device identity information and the configuration password information of the second device, the first device to securely connect to the second device, where the first device is the central node device, and the second device is any device of the at least two devices except the central node device; or the second device is the central node device, and the first device is any device of the at least two devices except the central node device.

In a first possible implementation manner, with reference to the sixth aspect, the network role attribute of the device includes a device type and/or a group owner intent value of the device.

According to a seventh aspect, an embodiment of the present invention provides a system for configuring multiple devices, including: the configuration device according to either of the third aspect and the fourth aspect, the first device according to either of the fifth aspect and the sixth aspect, and a second device needing to be configured on a same WLAN as the first device.

The embodiments of the present invention provide a method, device and system for configuring multiple devices, where a configuration device first acquires related information of at least two devices needing to be configured on a same WLAN and determines a central node device, and then sends related information of a non-central node device to the central node device or sends related information of the central node device to a non-central node device, so that the central node device and multiple non-central node devices are securely connected. This simplifies a configuration process and reduces a configuration time compared with the prior art in which when multiple devices needing to be added are configured, these devices needing to be added need to be configured one by one according to steps in the WPS specification.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a WLAN of a basic service set including a wireless access device;
FIG. 2 is a schematic diagram of a WLAN of a basic service set including no wireless access device;
FIG. 3 is a schematic diagram of a method for configuring multiple devices according to an embodiment of the present invention;
FIG. 4 is a schematic diagram of another method for configuring multiple devices according to an embodiment of the present invention;
FIG. 5 is a schematic flowchart of a method according to Embodiment 1;
FIG. 6 is a schematic diagram of an application scenario according to an embodiment of the present invention;
FIG. 7 is a schematic flowchart of a method according to Embodiment 2;
FIG. 8 is a structural diagram of a configuration device for configuring multiple devices according to an embodiment of the present invention;
FIG. 9 is a structural diagram of another configuration device for configuring multiple devices according to an embodiment of the present invention;
FIG. 10 is a hardware apparatus diagram of a configuration device for configuring multiple devices according to an embodiment of the present invention;
FIG. 11 is a structural diagram of a first device for configuring multiple devices according to an embodiment of the present invention;
FIG. 12 is a structural diagram of another first device for configuring multiple devices according to an embodiment of the present invention;
FIG. 13 is a hardware apparatus diagram of a first device for configuring multiple devices according to an embodiment of the present invention; and
FIG. 14 is a schematic diagram of a system for configuring multiple devices according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention are applicable to configuration performed, based on a WLAN, on multiple wireless devices by a configuration device, where the WLAN may be a basic service set (Basic Service Set, BSS for short) including a wireless access device, for example, an infrastructure network (infrastructure BSS); or may be a BSS including no wireless access device (un-infrastructure BSS), for example, a point-to-point network (P2P GROUP). A central node (Central Node) may be a control node in a BSS, and may be responsible for coordinating communication resources of subordinate non-central nodes. For example, an AP in an infrastructure network and a group owner (Group Owner, GO for short) in a P2P GROUP are both central nodes.

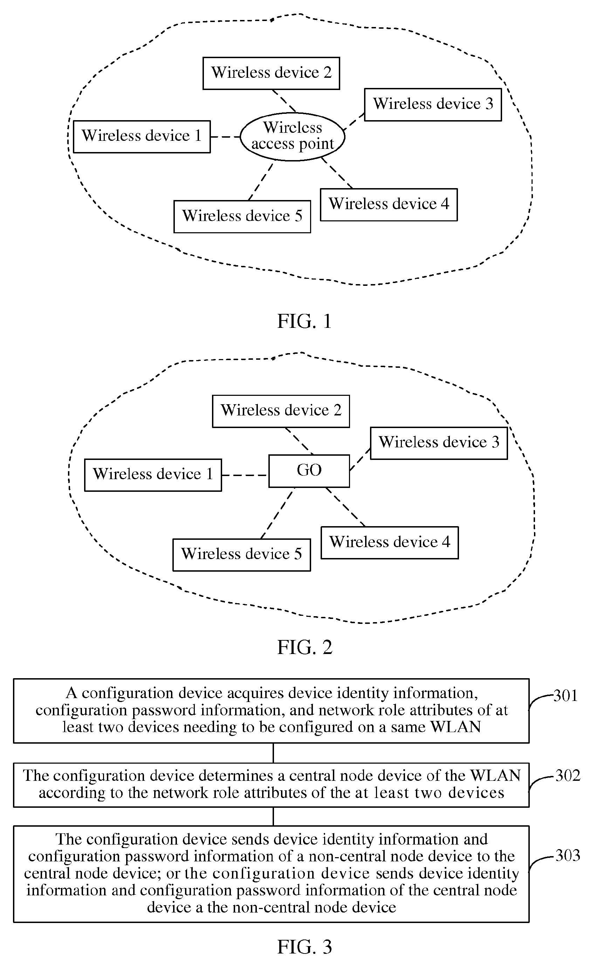

FIG. 1 shows an infrastructure network infrastructure BSS, where five wireless terminals are all within a range covered by an AP and perform communication by using a wireless signal provided by the AP.

FIG. 2 shows a P2P GROUP, where one of six wireless devices in the figure is a group owner (Group Owner, GO for short) in the P2P network and plays a role equivalent to that of an AP, and the rest five wireless devices are group clients (Group Clients) in the P2P network.

Referring to FIG. 3, FIG. 3 shows a method for configuring multiple devices according to an embodiment of the present invention. As shown in the figure, the method may specifically include:
301: A configuration device acquires device identity information, configuration password information, and network role attributes of at least two devices needing to be configured on a same WLAN.

Exemplarily, the configuration password information may be of a type such as a symmetric key or a public key of an asymmetric key, which is not limited.

Exemplarily, the device identity information may be any information that can uniquely identify a device, which is not limited in this embodiment, and for example, may be a Media Access Control (Media Access Control, MAC for short) address of a device. In this embodiment of the present invention, the configuration device may obtain, in any one of the following manners, the device identity information of the at least two devices needing to be configured on the same WLAN:
Manner A: The configuration device acquires the device identity information of the device by scanning a multi-dimensional code of the device, where the multi-dimensional code of the device includes the device identity information of the device.
   A specific form of the multi-dimensional code may be a static multi-dimensional code, for example, a multi-dimensional code printed on a label; or may be a dynamic multi-dimensional code, for example, a multi-dimensional code generated dynamically by a wireless device. A multi-dimensional code style may be any readable one-dimensional barcode style or two-dimensional barcode style such as a universal product code (Universal Product Code, UPC for short) and a quick response code (Quick Response Code, QR for short), which is not limited in this embodiment of the present invention.
Manner B: The configuration device receives a configuration request message sent by the device, where the configuration request message includes the device identity information of the device.
Manner C: The configuration device reads the device identity information of the device by using a wireless low-power technology.
   Common wireless low-power technologies include NFC, low energy Bluetooth, a low-power Wi-Fi signal, and the like; correspondingly, specific implementation manners may include any feasible manner such as reading by using an NFC interface, receiving a Bluetooth signal, and receiving a low-power Wi-Fi signal. This embodiment of the present invention is not limited thereto. An effective transmission distance of a wireless signal in a wireless low-power technology is relatively short, which ensures that the configuration device can receive the wireless signal only at a distance relatively close to the device and that the wireless signal can be prevented from being maliciously eavesdropped, thereby improving security.

Specifically, in this embodiment of the present invention, the configuration device may obtain, in any one of the following manners, the configuration password information of the at least two devices needing to be configured on the same WLAN:
the configuration device acquires the configuration password information of the device by scanning a multi-dimensional code of the device, where the multi-dimensional code of the device includes the configuration password information of the device; for details, refer to the manner A, which is not described again; or
the configuration device receives configuration password information of the device that is entered by a user, where the configuration password information of the device is read by the user from the device and then is entered on the configuration device; for example, the user reads a PIN code of the device needing to be configured, where the PIN code may be static, for example, printed on a label, or be dynamic, for example, generated dynamically and then displayed on a user interface (User Interface, UI for short), and the user enters the PIN code on the configuration device; or
the configuration device reads the configuration password information of the device by using a wireless low-power technology; for details, refer to the manner C, which is not described again; or
the configuration device uses pre-negotiated configuration password information as the configuration password information of the device according to an instruction of a user; for example, in a PBC manner, uses a default PIN (for example, "00000000" stipulated in the WPS specification, which is not limited in this embodiment of the present invention herein) as the configuration password information of the device.

Exemplarily, a network role attribute is used for describing a specific role and function, in a network, of a device corresponding to the network role attribute, and may be, for example, a device type and/or a group owner intent value of the corresponding device, where the device type is used for denoting a specific type of a function of the device, such as a personal computer, a digital camera, a keyboard, a scanner, a notebook computer, or an access point (Access Point, AP for short). In this embodiment of the present invention, the configuration device may obtain, in any one of the following manners, the network role attributes of the at least two devices needing to be configured on the same WLAN:
the configuration device acquires the network role attribute of the device by scanning a multi-dimensional code of the device, where the multi-dimensional code of the device includes the network role attribute of the device; for details, refer to the manner A, which is not described again; or
the configuration device receives a configuration request message sent by the device, where the configuration request message includes the network role attribute of the device; for details, refer to the manner B, which is not described again; or
the configuration device reads the network role attribute of the device by using a wireless low-power technology; for details, refer to the manner C, which is not described again.

It should be noted that, the configuration device may acquire device identity information, configuration password information, and network role attributes of different devices in mutually independent manners or in a same manner; the configuration device may also acquire device identity information, configuration password information, and a network role attribute of a same device in mutually independent manners or in a same manner.

For example, the configuration device acquires device identity information, configuration password information, and network role attributes of different devices in mutually independent manners, and the configuration device acquires device identity information, configuration password information, and a network role attribute of a same device in mutually independent manners; or
the configuration device acquires device identity information, configuration password information, and network role attributes of different devices in a same manner, and the configuration device acquires device identity information, configuration password information, and a network role attribute of a same device in mutually independent manners; or
the configuration device acquires device identity information, configuration password information, and network role attributes of different devices in mutually independent manners, and the configuration device acquires any two or three of device identity information, configuration password information, and a network role attribute of a same device in a same manner, where it should be noted that, for purpose of simple and convenient user experience for the configuration device, preferably, the configuration device may acquire three parameters, device identity information, configuration password information, and a network role attribute of a same device one time in a unified manner; for example, the configuration device may acquire device identity information, configuration password information, and a network role attribute of a device by scanning a multi-dimensional code label of the device; or
the configuration device may acquire device identity information, configuration password information, and a network role attribute of a device by using a wireless low-power technology, for example, in an NFC manner.

302: The configuration device determines a central node device of the WLAN according to the network role attributes of the at least two devices.

Specifically, the configuration device may determine one or more central node devices of the WLAN according to the network role attributes of the at least two devices.

Exemplarily, the configuration device may determine the central node device of the WLAN in at least one of the following manners:
1. If the configuration device determines, according to the device type in the network role attribute of the device, that the device type of the device is a wireless access point AP, the configuration device uses the device as the central node device of the WLAN.
2. If the configuration device determines, according to the device type in the network role attribute of the device, that the devices needing to be configured on the same WLAN include no AP, the configuration device determines the central node device of the WLAN according to the group owner intent value in the network role attribute of the device, or determines the central node device of the WLAN according to the device type and the group owner intent value in the network role attribute and a preset correspondence between the device type and the group owner intent value. Separate descriptions are given below:

Exemplarily, if the central node device of the WLAN is determined according to the group owner intent value alone, a device whose group owner intent value is greatest or smallest may be selected as the central node device of the WLAN according to a preset rule, which is not specifically limited herein.

Exemplarily, for the preset correspondence between the device type and the group owner intent value, reference may be made to a mapping between a device type and an identity (Identity, ID for short) value in the WPS standard, and a form that is the same as or similar to that of the mapping is used. In this embodiment, a part of the mapping between a device type and an ID value in the WPS standard is cut out for brief description, as shown in Table 1. Specific content of the mapping between a device type and an ID value in the WPS standard is not described herein again.

**Table 1**

| **Type** | **ID value** | **Subtype** | **ID value** |
|---|---|---|---|
| Computer | 1 | Personal computer | 1 |
| | | Server | 2 |
| | | Tablet computer | 9 |
| Camera | 4 | Digital camera | 1 |
| | | Video camera | 2 |

It can be seen from this that, each type corresponds to an ID value of one type, and each subtype in a same type also corresponds to an ID value of one subtype. Exemplarily, the configuration device may acquire a type ID value and a subtype ID value of a corresponding device according to device types in network role attributes of all devices, and then select a corresponding device whose type ID value and subtype ID value are both smallest/greatest ID values as the central node device according to a preset rule. In this embodiment, a corresponding device whose type ID value and subtype ID value are both smallest ID values may be selected as the central node device.

For example, when the device type includes the personal computer and the digital camera, as shown in Table 1, because the type ID value of the personal computer is less than the type ID value of the digital camera, the configuration device may determine that the personal computer is the central node; or when the device type includes the personal computer and the tablet computer, as shown in Table 1, because the type ID value of the personal computer is the same as that of the tablet computer, but the subtype ID value of the personal computer is less than the subtype ID value of the tablet computer, the configuration device may determine that the personal computer is the central node.

303: The configuration device sends device identity information and configuration password information of a non-central node device to the central node device, so that the central node device securely connects to the non-central node device according to the device identity information and the configuration password information of the non-central device; or
the configuration device sends device identity information and configuration password information of the central node device to the non-central node device, so that the non-central node device securely connects to the central node device according to the device identity information and the configuration password information of the central node device, where
the non-central node device is a device of the at least two devices except the central node device.

Further, before the sending device identity information and configuration password information of a non-central node device to the central node device, the configuration device may authenticate with the central node device according to configuration password information of the central node device; or
before the sending device identity information and configuration password information of the central node device to the non-central node device, the configuration device may authenticate with the non-central node device according to configuration password information of the non-central node device.

Exemplarily, when the configuration device determines, according to the network role attributes of the devices, that there are at least two central node devices on the WLAN, there may be at least three devices needing to be configured on the same WLAN, and in this case, step 303 may be specifically:

The configuration device may send device identity information and configuration password information of a non-central node device to the at least two central node devices separately, so that the at least two central node devices securely connect to the non-central node device in a one-to-one manner according to the device identity information and the configuration password information of the non-central device; or
the configuration device sends device identity information and configuration password information of the at least two central node devices to the non-central node device, so that the non-central node device securely connects to the central node devices in a one-to-one manner according to the device identity information and the configuration password information that correspond to the at least two central node devices.

For example, in a case in which the configuration device sends the device identity information and the configuration password information of the non-central node device to the at least two central node devices separately, after each central node device acquires device identity information and configuration password information of all non-central node devices, the at least two central node devices may separately securely connect to the non-central node device in a one-to-one manner according to the device identity information and the configuration password information of the non-central device. A process in which each central node device securely connects to a non-central node device is similar to the foregoing process in which when one central node is included, the central node establishes a secure connection to a non-central node, and a difference lies in that, if a central node finds that a non-central node to which the central node intends to establish a secure connection has already established a secure connection to another central node than the central node, the central node does no longer securely connect to the non-central node.

In a case in which the configuration device sends the device identity information and the configuration password information of the at least two central node devices to the non-central node device, after each non-central node device acquires the device identity information and the configuration password information of all central node devices, each non-central node device securely connects to the at least two central node devices in a one-to-one manner according to the device identity information and the configuration password information that correspond to the at least two central node devices, and a specific process is similar to that described above, and is not described herein again.

Embodiments of the present invention provide a method, device and system for configuring multiple devices, where a configuration device first acquires related information of at least two devices needing to be configured on a same WLAN and determines a central node device, and then sends related information of a non-central node device to the central node device or sends related information of the central node device to a non-central node device, so that the central node device and the non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

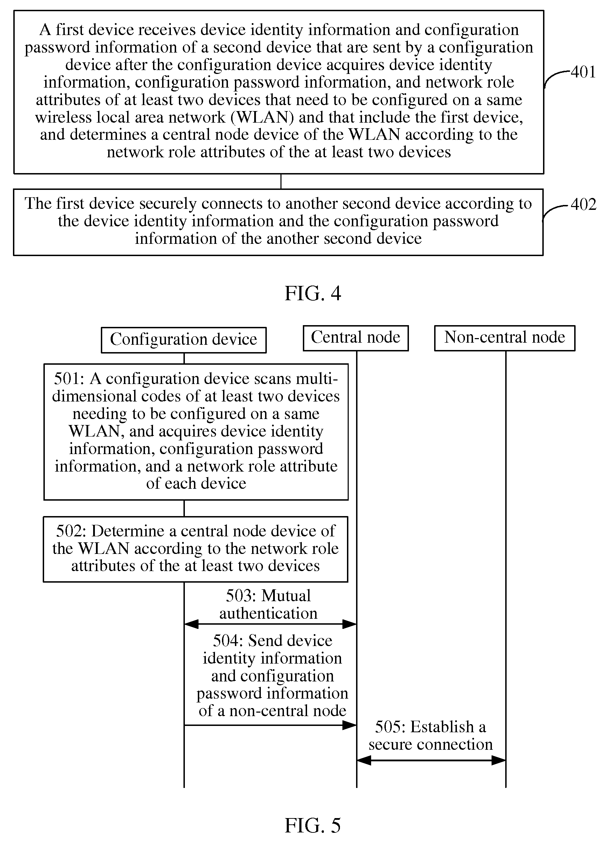

Referring to FIG. 4, FIG. 4 shows a method for configuring multiple devices according to an embodiment of the present invention. As shown in the figure, the method may specifically include:
401: A first device receives device identity information and configuration password information of a second device that are sent by a configuration device after the configuration device acquires device identity information, configuration password information, and network role attributes of at least two devices that need to be configured on a same WLAN and that include the first device, and determines a central node device of the WLAN according to the network role attributes of the at least two devices.

Exemplarily, in this embodiment, the first device may be the central node device, and the second device is any device of the at least two devices except the central node device; or
the second device may be the central node device, and the first device is any device of the at least two devices except the central node device.

Exemplarily, when the first device is the central node device, the first device authenticates with the configuration device according to configuration password information of the first device before the first device receives the device identity information and the configuration password information of the second device that are sent by the configuration device;
or
when the second device is the central node device, the first device authenticates with the configuration device according to configuration password information of the first device before the first device receives the device identity information and the configuration password information of the second device that are sent by the configuration device.

Specifically, the authenticating with the configuration device according to the configuration password information of the first device acquired by the configuration device includes either of the following manners, which is not limited in this embodiment of the present invention:
the first device performs authentication by performing WPS interaction with the configuration device according to the configuration password information of the first device acquired by the configuration device; or
the first device authenticates with the configuration device by means of four-way handshake according to the configuration password information of the first device acquired by the configuration device.

Specifically, in this embodiment of the present invention, when the first device is a central node device, the receiving, by the first device, device identity information and configuration password information of a second device that are sent by a configuration device may include: receiving, by the first device, device identity information and configuration password information of a non-central node device of the WLAN that are sent by the configuration device.

Specifically, in this embodiment of the present invention, when the first device is a non-central node device, the receiving, by the first device, device identity information and configuration password information of a second device that are sent by the configuration device includes:
receiving, by the first device, device identity information and configuration password information of a central node device of the WLAN that are sent by the configuration device.

Exemplarily, a network role attribute of a device includes a device type and/or a group owner intent value of the device.

Exemplarily, before the first device authenticates with the configuration device according to the configuration password information of the first device acquired by the configuration device, the method may further include:
sending, by the first device, a configuration request message to the configuration device, where the configuration request message includes any one or more of the following: device identity information of the first device, network role attribute of the first device, and the configuration password information of the first device.

402: The first device securely connects to the second device according to the device identity information and the configuration password information of the second device.

Further, when the configuration device determines, according to the network role attributes of the devices, that there are at least two central node devices on the WLAN, there may be at least three devices needing to be configured on the same WLAN, and the securely connecting, by the first device, to the second device according to the device identity information and the configuration password information of the second device includes:
when the first device is the central node device, securely connecting, by the first device, to the second device in a one-to-one manner according to the device identity information and the configuration password information of the second device; or
when the second device is the central node device, securely connecting, by the first device, to one of the second devices in a one-to-one manner according to device identity information and configuration password information that correspond to the at least two second devices.

Embodiments of the present invention provide a method, device and system for configuring multiple devices, where a configuration device first acquires related information of at least two devices needing to be configured on a same WLAN and determines a central node device, and then sends related information of a non-central node device to the central node device or sends related information of the central node device to a non-central node device, so that the central node device and the non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

The methods provided in the embodiments of the present invention are described below by using two specific embodiments.

### Embodiment 1

As shown in FIG. 5, FIG. 5 shows a specific embodiment of a method for configuring multiple devices according to an embodiment of the present invention, including:
501: A configuration device scans multi-dimensional codes of at least two devices needing to be configured on a same WLAN, and acquires device identity information, configuration password information, and a network role attribute of each device.

Exemplarily, a network role attribute of a device may include a device type and/or a group owner intent value of the device.

502: The configuration device determines a central node device of the WLAN according to the network role attributes of the at least two devices.

Specifically, the configuration device may determine one or more central node devices of the WLAN according to the network role attributes of the at least two devices.

Exemplarily, the configuration device may determine the central node device of the WLAN in at least one of the following manners:
1. If the configuration device determines, according to the device type in the network role attribute of the device, that the device type of the device is an AP, the configuration device uses the device as the central node device of the WLAN, where a specific scenario is shown in FIG. 1, and the configuration device determines that a wireless access point is used as a central node and that the other wireless devices are used as non-central nodes.
2. If the configuration device determines, according to the device type in the network role attribute of the device, that the devices needing to be configured on the same WLAN include no AP, the configuration device determines the central node device of the WLAN according to the group owner intent value in the network role attribute of the device, where in this embodiment, that a device whose group owner intent value is greatest/smallest is used as the central node device of the WLAN is determined according to a preset rule, and is not limited herein; or
   determines the central node device of the WLAN according to the device type and the group owner intent value in the network role attribute and a preset correspondence between the device type and the group owner intent value.

A specific scenario is shown in FIG. 2, and the configuration device determines that a GO is used as a central node device and that the other wireless devices are used as non-central node devices.

After performing analysis to acquire the central node device, the configuration device may use the central node device as a first device, use the non-central node device other than the central node device as a second device, authenticate with the first device, and sends the device identity information and the configuration password information of the second device to the first device. A specific process is as described in step 503 and step 504.

503: The configuration device mutually authenticates with the central node device.

Exemplarily, the configuration device may authenticate with the central node device in either of the following manners, which is not limited in this embodiment of the present invention.

Manner I: The configuration device may perform WPS interaction with the central node device by using configuration password information of the central node device as authentication information, and if it is determined, by means of authentication through M1-M8 message exchange in WPS, that the configuration password information of the central node device is the same as the configuration password information of the central node device acquired by the configuration device, the configuration device may obtain security configuration information provisioned by the central node device, and the configuration device may complete authentication with the central node device by using the security configuration information.

Manner II: The configuration device may further use the acquired configuration password information of the central node device as a pre-shared key (Pre-Shared Key, PSK for short), and complete authentication after performing four-way handshake with the central node device, where the four-way handshake is a standardized authentication process in the IEEE802.11 standard, and is not described herein again.

504: The configuration device sends device identity information and configuration password information of a non-central node device to the central node device.

Exemplarily, the configuration device may send the device identity information and the configuration password information of the non-central node device to the central node device in a packet form.

It should be noted that, a person skilled in the art may understand that, step 503 and step 504 may be performed one after another, or may be performed at the same time, which completely depends on an authentication manner. For example, information such as the security configuration information and the device identity information, the configuration password information, and network role attribute of the non-central node device may be sent after the authentication process ends, or may be sent in an authentication interaction message, or may be used as a part of the authentication process and as one of conditions for determining whether the authentication succeeds, which is not limited in the present invention. Moreover, the information such as the security configuration information and the device identity information, the configuration password information, and the network role attribute of the non-central node device may be sent at the same time, or may be sent separately, which is not limited in this embodiment of the present invention.

505: The central node device securely connects to the non-central node device.

Exemplarily, after the configuration device sends the device identity information and the configuration password information of the non-central node device to the central node device, the central node device performs device discovery with the non-central node device according to the received device identity information of the non-central node device, and authenticates with the non-central node device by using the configuration password information of the non-central node device, where an authentication manner is similar to the process of the manner I or the manner II described above, and is not described herein again.

After the authentication succeeds, the central node device obtains security configuration information sent by the non-central node device. The central node device may securely connect to the non-central node device by using the security configuration information. The security configuration information may be sent after the authentication process of the central node device and the non-central node device ends, or may be sent in an authentication interaction message, or may be used as a part of the authentication process and as one of conditions for determining whether the authentication succeeds, which is not limited in the present invention.

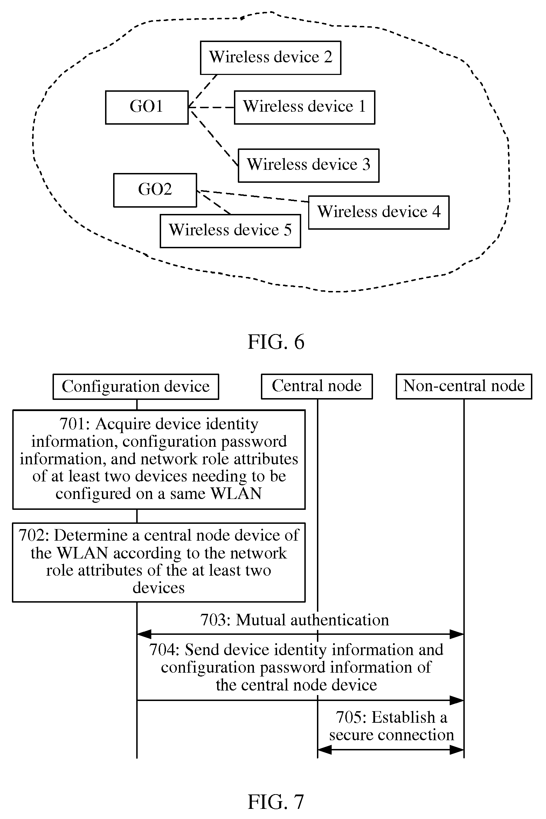

It should be noted that, in step 502, when the configuration device determines, according to the network role attributes of the devices, that there are at least two central node devices on the WLAN, there may be at least three devices needing to be configured on the same WLAN; for details, which is specifically like the scenario shown in FIG. 6. For purpose of clear description, in the scenario shown in FIG. 6, two central node devices, GO1 and GO2 separately, are provided, and the rest are non-central node devices.

Correspondingly, the configuration device may use the two central node devices as first devices, authenticate with the two devices separately, and send device identity information and configuration password information of a second device other than all the first devices to each first device. A specific process is similar to that of step 503 and step 504, and is not described herein again.

After each central node device acquires device identity information and configuration password information of all non-central node devices, the at least two central node devices may separately securely connect to the non-central node device in a one-to-one manner according to the device identity information and the configuration password information of the non-central devices. Moreover, a process in which each central node device securely connects to a non-central node device is similar to the foregoing process in which when one central node is included, the central node establishes a secure connection to a non-central node, and a difference lies in that, if a central node finds that a non-central node to which the central node intends to establish a secure connection has already completed authentication with another central node than the central node, the central node does no longer securely connect to the non-central node. For example, in the scenario shown in FIG. 6, GO2 finds that a wireless device 3 has already completed authentication with GO1, and therefore, does not securely connect to the wireless device 3.

Specifically, a central node device may determine, by determining whether a probe request frame sent by a non-central node device includes a WI-FI simple configuration information element (Wi-Fi Simple Configuration Information Element, WSC IE for short), whether the non-central node device has already securely connected to the central node device, so that each central node device securely connects to the non-central node device in a one-to-one manner. A specific process is similar to the foregoing process, and is not described herein again.

For example, in FIG. 6, GO2 may receive a probe request frame sent by the wireless device 3, and if GO2 finds that the probe request frame includes no WSC IE, it indicates that the wireless device 3 has already completed authentication with another central node device (for example, GO1); therefore, GO2 does not securely connect to the wireless device 3; and

GO2 may further receive a probe request frame sent by a wireless device 4, and if GO2 finds that the probe request frame includes a WSC IE, it indicates that the wireless device 4 has not yet completed authentication with another central node device; in this case, GO2 may securely connect to the wireless device 4.

This embodiment of the present invention provides a method for configuring multiple devices, where a configuration device first acquires related information of at least two devices needing to be configured on a same WLAN and determines a central node device, and then sends related information of a non-central node device to the central node device or sends related information of the central node device to a non-central node device, so that the central node device and the non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

### Embodiment 2

As shown in FIG. 7, FIG. 7 shows a specific embodiment of another method for configuring multiple devices according to an embodiment of the present invention, including:
701: A configuration device acquires device identity information, configuration password information, and network role attributes of at least two devices needing to be configured on a same WLAN.
   Exemplarily, a network role attribute is used for describing a specific role and function, in a network, of a device corresponding to the network role attribute, and may include a device type and/or a group owner intent value of the corresponding device. Specifically, in this embodiment of the present invention, a manner in which the configuration device acquires the device identity information, the configuration password information, and the network role attributes of the at least two devices needing to be configured on the same WLAN is the same as the manner described in Embodiment 1, and is not described herein again in this embodiment.
702: The configuration device determines a central node device of the WLAN according to the network role attributes of the at least two devices.

Specifically, the configuration device may determine one or more central node devices of the WLAN according to the network role attributes of the at least two devices.

Exemplarily, the configuration device may determine the central node device of the WLAN in at least one of the following manners:
1. If the configuration device determines, according to the device type in the network role attribute of the device, that the device type of the device is a wireless access point AP, the configuration device uses the device as the central node device of the WLAN.
2. If the configuration device determines, according to the device type in the network role attribute of the device, that the devices needing to be configured on the same WLAN include no AP, the configuration device determines the central node device of the WLAN according to the group owner intent value in the network role attribute of the device, where in this embodiment, that a device whose group owner intent value is greatest/smallest is used as the central node device of the WLAN is determined according to a preset rule, and is not limited herein; or
   determines the central node device of the WLAN according to the device type in the network role attribute and a preset correspondence between the device type and the group owner intent value. A specific manner is described in the embodiment shown in FIG. 3, and is not described again.

A specific scenario is shown in FIG. 2, and the configuration device determines that a GO is used as a central node device and that the other wireless devices are used as non-central node devices.

After the configuration device determines the central node device, a difference between this embodiment and Embodiment 1 lies in that, the configuration device may use all non-central node devices as first devices to perform authentication, use the other device (that is, the central node device) than the first devices as a second device, and send device identity information, configuration password information, and a network role attribute of the second device to the first devices. A specific process is as described in step 703 and step 704.

703: The configuration device mutually authenticates with a non-central node device.

Exemplarily, in this embodiment, the configuration device may authenticate with all the non-central node devices, and a specific manner may be like the manner I and the manner II in Embodiment 1, which is not limited in this embodiment.

704: The configuration device sends device identity information and configuration password information of the central node device to the non-central node device.

Exemplarily, the configuration device may send the device identity information and the configuration password information of the central node device to the non-central node device in a packet form.

It should be noted that, a person skilled in the art may understand that, step 703 and step 704 may be performed one after another, or may be performed at the same time, which completely depends on an authentication manner. For example, information such as security configuration information of the non-central node device and the device identity information and the configuration password information of the central node device may be sent after the authentication process ends, or may be sent in an authentication interaction message, or may be used as a part of the authentication process and as one of conditions for determining whether the authentication succeeds, which is not limited in the present invention. Moreover, the information such as the security configuration information of the non-central node device and the device identity information and the configuration password information of the central node device may be sent at the same time, or may be sent separately, which is not limited in this embodiment of the present invention.

705: The non-central node device securely connects to the central node device.

Exemplarily, in this embodiment, a specific manner in which the non-central node device securely connects to the central node device may be similar to the manner described in step 505 in Embodiment 1, and is not described herein again.

It should be noted that, in step 702, when the configuration device determines, according to the network role attributes of the devices, that there are at least two central node devices on the WLAN, there may be at least three devices needing to be configured on the same WLAN, which is like the scenario shown in FIG. 6. For purpose of clear description, in the scenario shown in FIG. 6, two central node devices, GO1 and GO2 separately, are provided, and the rest are non-central node devices.

Correspondingly, the configuration device uses the two central node devices separately as second devices, and uses the non-central node devices separately as first devices. The configuration device authenticates with the first devices, and sends device identity information and configuration password information of the at least two second devices to each first device. A specific process is similar to that of step 703 and step 704, and is not described herein again.

After the first device acquires the device identity information and the configuration password information of the at least two second devices, the first device securely connects to one of the at least two second devices in a one-to-one manner according to the device identity information and the configuration password information that correspond to the at least two second devices.

Specifically, in FIG. 6, a wireless device 3 may send a probe request frame to GO2, and if GO2 finds that the probe request frame includes no WSC IE, it indicates that the wireless device 3 has already completed authentication with another central node device (for example, GO1); therefore, the wireless device 3 does not securely connect to GO2; and
moreover, a wireless device 4 may also send a probe request frame to GO2, and if GO2 finds that the probe request frame includes a WSC IE, it indicates that the wireless device 4 has not yet completed authentication with another central node device; in this case, the wireless device 4 may securely connect to GO2.

This embodiment of the present invention provides a method for configuring multiple devices, where a configuration device first acquires related information of at least two devices needing to be configured on a same WLAN and determines a central node device, and then sends related information of a non-central node device to the central node device or sends related information of the central node device to a non-central node device, so that the central node device and the non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

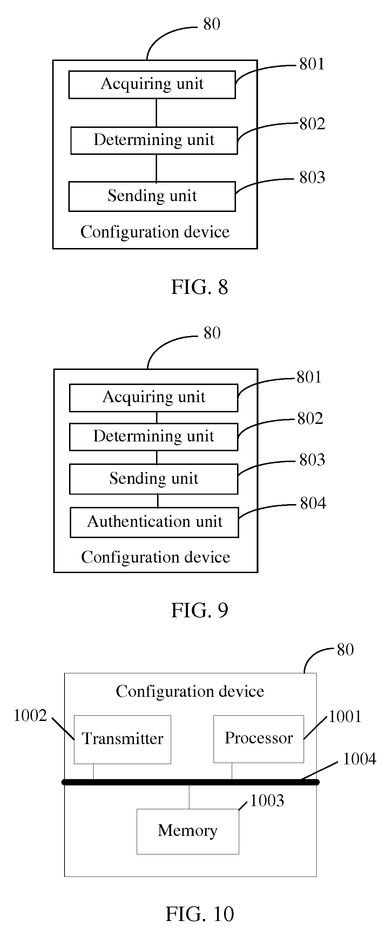

Referring to FIG. 8, FIG. 8 shows a configuration device 80 for configuring multiple devices according to an embodiment of the present invention, including:
an acquiring unit 801, configured to acquire device identity information, configuration password information, and network role attributes of at least two devices needing to be configured on a same WLAN;
a determining unit 802, configured to determine a central node device of the WLAN according to the network role attributes of the at least two devices; and
a sending unit 803, configured to send device identity information and configuration password information of a non-central node device to the central node device, so that the central node device securely connects to the non-central node device according to the device identity information and the configuration password information of the non-central device; or
to send device identity information and configuration password information of the central node device to the non-central node device, so that the non-central node device securely connects to the central node device according to the device identity information and the configuration password information of the central node device, where
the non-central node device is a device of the at least two devices except the central node device; or configured to send the device identity information and the configuration password information of the central node device to the non-central node device, so that the central node device and the non-central node device are securely connected according to the device identity information and the configuration password information of the device.

Exemplarily, the configuration password information may be of a type such as a symmetric key or a public key of an asymmetric key, which is not limited.

Exemplarily, a network role attribute is used for describing a specific role and function, in a network, of a device corresponding to the network role attribute, and may include a device type and/or a group owner intent value of the corresponding device, where the device type is used for denoting a specific type of a function of the device, such as a personal computer, a digital camera, a keyboard, a scanner, a notebook computer, or an AP.

Exemplarily, the device identity information may be any information that can uniquely identify a device, which is not limited in this embodiment, and for example, may be a MAC address of a device.

Specifically, in this embodiment of the present invention, the acquiring unit 801 may be configured to:
acquire the device identity information of the device by scanning a multi-dimensional code of the device, where the multi-dimensional code of the device includes the device identity information of the device; a specific form of the multi-dimensional code may be a static multi-dimensional code, for example, a multi-dimensional code printed on a label; or may be a dynamic multi-dimensional code, for example, a multi-dimensional code generated dynamically by a wireless device; and the multi-dimensional code style may be any readable one-dimensional barcode style or two-dimensional barcode style, such as a UPC or QR, which is not limited in this embodiment of the present invention; or
receive a configuration request message sent by the device, where the configuration request message includes the device identity information of the device; or
read the device identity information of the device by using a wireless low-power technology, where common wireless low-power technologies include NFC, low energy Bluetooth, a low-power Wi-Fi signal, and the like; correspondingly, specific implementation manners may include any feasible manner such as reading by using an NFC interface, receiving a Bluetooth signal, and receiving a low-power Wi-Fi signal; this embodiment of the present invention is not limited thereto; an effective transmission distance of a wireless signal in a wireless low-power technology is relatively short, which ensures that the configuration device can receive the wireless signal only at a distance relatively close to the device and that the wireless signal can be prevented from being maliciously eavesdropped, thereby improving security.

Exemplarily, the acquiring unit 801 may be further configured to:
acquire the network role attribute of the device by scanning a multi-dimensional code of the device, where the multi-dimensional code of the device includes the network role attribute of the device; or
receive a configuration request message sent by the device, where the configuration request message includes the network role attribute of the device; or
read the network role attribute of the device by using a wireless low-power technology.

Exemplarily, the acquiring unit 801 may be further configured to:
acquire the configuration password information of the device by scanning a multi-dimensional code of the device, where the multi-dimensional code of the device includes the configuration password information of the device; or
receive configuration password information of the device that is entered by a user, where the configuration password information of the device is read by the user from the device and then is entered; for example, the user reads a PIN code of the device needing to be configured, where the PIN code may be static, for example, printed on a label, or be dynamic, for example, generated dynamically and then displayed on a UI interface, and the user enters the PIN code on the configuration device; or
read the configuration password information of the device by using a wireless low-power technology; or
use pre-negotiated configuration password information as the configuration password information of the device according to an instruction of a user; for example, in a PBC manner, use a default PIN (for example, "00000000" stipulated in the WPS specification, which is not limited in this embodiment of the present invention herein) as the configuration password information of the device.

It should be noted that, the acquiring unit 801 acquires device identity information, configuration password information, and network role attributes of different devices in independent manners, and the acquiring unit 801 acquires device identity information, configuration password information, and a network role attribute of a same device in independent manners; or the acquiring unit 801 acquires device identity information, configuration password information, and network role attributes of different devices in a same manner, and the acquiring unit 801 acquires device identity information, configuration password information, and a network role attribute of a same device in independent manners; or the acquiring unit 801 acquires device identity information, configuration password information, and network role attributes of different devices in independent manners, and the acquiring unit 801 acquires any two or three of device identity information, configuration password information, and a network role attribute of a same device in a same manner. It should be noted that, for purpose of simple and convenient user experience for the configuration device 80, preferably, the acquiring unit 801 may acquire three parameters, device identity information, configuration password information, and a network role attribute of a same device one time in a unified manner; for example, the acquiring unit 801 may acquire device identity information, configuration password information, and a network role attribute of a device by scanning a multi-dimensional code label of the device; or
the acquiring unit 801 may acquire device identity information, configuration password information, and a network role attribute of a device by using a wireless low-power technology, for example, in an NFC manner.

Specifically, the determining unit 802 may determine one or more central node devices of the WLAN according to the network role attributes of the at least two devices.

Exemplarily, the determining unit 802 may determine the central node device of the WLAN in at least one of the following manners:
1. If the determining unit 802 determines, according to the device type in the network role attribute of the device, that the device type of the device is a wireless access point AP, the determining unit 802 uses the device as the central node device of the WLAN. Specifically, the determining unit 802 may traverse device types in the acquired network role attributes of all the devices, and when a device type in a network role attribute is an AP, the determining unit 802 uses a device corresponding to this device type as the central node device of the WLAN.
2. If the determining unit 802 determines, according to the device type in the network role attribute of the device, that all the devices needing to be configured on the same WLAN include no AP, the determining unit 802 determines the central node device of the WLAN according to the group owner intent value in the network role attribute of the device; or determines the central node device of the WLAN according to the device type and the group owner intent value in the network role attribute and a preset correspondence between the device type and the group owner intent value. Separate descriptions are given below:

Exemplarily, in this embodiment, if the central node device of the WLAN is determined according to the group owner intent value alone, a device whose group owner intent value is greatest or smallest may be selected as the central node device of the WLAN according to a preset rule, which is not specifically limited herein.

Exemplarily, the central node device of the WLAN is determined according to the device type in the network role attribute and a preset correspondence between the device type and the group owner intent value. Preferably, in this embodiment, the preset correspondence between the device type and the group owner intent value may be presented in a form of a mapping between a device type and an ID value in the WPS standard. In this embodiment, a part of the mapping between a device type and an ID value in the WPS standard is captured for brief description, as shown in Table 1. Specific content of the mapping between a device type and an ID value in the WPS standard is not described herein again.

In Table 1, each type corresponds to an ID value of a type, and each subtype in a same type also corresponds to an ID value of a subtype. The determining unit 802 acquires a type ID value and a subtype ID value of a corresponding device according to device types in network role attributes of all devices, and then selects a corresponding device whose type ID value and subtype ID value are both smallest/greatest ID values as the central node device according to a preset rule.

For example, when the device type includes the personal computer and the digital camera, as shown in Table 1, because the type ID value of the personal computer is less than the type ID value of the digital camera, the determining unit 802 may determine that the personal computer is the central node; or when the device type includes the personal computer and the tablet computer, as shown in Table 1, because the type ID value of the personal computer is the same as that of the tablet computer, but the subtype ID value of the personal computer is less than the subtype ID value of the tablet computer, the determining unit 802 may determine that the personal computer is the central node.

Exemplarily, as shown in FIG. 9, the configuration device 80 may further include an authentication unit 804, configured to authenticate with the central node device according to the configuration password information of the central node device acquired by the acquiring unit 801; or
configured to authenticate with the non-central node device according to the configuration password information of the non-central node device acquired by the acquiring unit 801.

Specifically, after the determining unit 802 determines the central node device, the authentication unit 804 may mutually authenticate with the central node device, and the sending unit 802 sends the device identity information and the configuration password information of the non-central node device to the central node device;
or the authentication unit 804 may mutually authenticate with the non-central node device, and send the device identity information and the configuration password information of the central node device to the non-central node device. This embodiment of the present invention is not limited thereto.

Further, the authentication unit 804 may be configured to:
perform authentication by performing WPS interaction with the central node device or the non-central node device; or
authenticate with the central node device or the non-central node device by means of four-way handshake according to the configuration password information of the central node device or the non-central node device.

The authentication unit 804 may perform WPS interaction with the central node device by using configuration password information of the central node device as authentication information, and if it is determined, by means of authentication through M1-M8 message exchange in WPS, that the configuration password information of the central node device is the same as the configuration password information of the central node device acquired by the configuration device, the configuration device may obtain security configuration information provisioned by the central node device, and the configuration device may complete authentication with the central node device by using the security configuration information; or
the authentication unit 804 may use the acquired configuration password information of the central node device as a PSK, and complete authentication after performing four-way handshake with the central node device, where the four-way handshake is a standardized authentication process in the IEEE802.11 standard, and is not described herein again.

Exemplarily, the sending unit 803 may send the device identity information and the configuration password information of the non-central node device to the central node device in a packet form; or may send the device identity information and the configuration password information of the central node device to the non-central node device in a packet form.

It should be noted that, a person skilled in the art may understand that, the authentication process of the authentication unit 804 and the sending process of the sending unit 803 may be performed one after another, or may be performed at the same time, which completely depends on an authentication manner. For example, information such as the security configuration information and the device identity information and the configuration password information of the central node device may be sent after the authentication process ends, or may be sent in an authentication interaction message, or may be used as a part of the authentication process and as one of conditions for determining whether the authentication succeeds, which is not limited in the present invention. Moreover, the information such as the security configuration information and the device identity information and the configuration password information of the central node device may be sent at the same time, or may be sent separately, which is not limited in this embodiment of the present invention.

Further, when the determining unit 802 determines, according to the network role attributes of the devices, that there are at least two central node devices on the WLAN, there may be at least three devices needing to be configured on the same WLAN, which is like the scenario shown in FIG. 6, where two central node devices, GO1 and GO2 separately, are provided, and the rest are non-central node devices.

Correspondingly, the sending unit 803 sends device identity information and configuration password information of a non-central node device to the at least two central node devices separately, so that the at least two central node devices securely connect to the non-central node device in a one-to-one manner according to the device identity information and the configuration password information of the non-central device; or
the sending unit 803 sends device identity information and configuration password information of the at least two central node devices to the non-central node device, so that the non-central node device securely connects to the central node devices in a one-to-one manner according to the device identity information and the configuration password information that correspond to the at least two central node devices.

This embodiment of the present invention provides a configuration device 80 for configuring multiple devices, where the configuration device 80 first acquires related information of at least two devices needing to be configured on a same WLAN and determines a central node device, and then sends related information of a non-central node device to the central node device or sends related information of the central node device to a non-central node device, so that the central node device and the non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

Referring to FIG. 10, FIG. 10 is a hardware apparatus diagram of a configuration device 80 for configuring multiple devices according to an embodiment of the present invention, including: at least one processor 1001, at least one transmitter 1002, a memory 1003, and at least one communications bus 1004 that is configured to implement connection and mutual communication between these apparatuses.

The communications bus 1004 may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus 1004 may be classified into an address bus, a data bus, a control bus, and the like. For convenience of denotation, in FIG. 10, only one thick line is used for denotation, but it does not mean that there is only one bus or one type of buses.

The memory 1004 is configured to store executable program code, where the program code includes a computer operation instruction. The memory 1004 may include a high-speed RAM memory, or may further include a non-volatile memory (non-volatile memory), for example, at least one magnetic disk storage.

The processor 1001 may be a central processing unit (Central Processing Unit, CPU for short), or an application specific integrated circuit (Application Specific Integrated Circuit, ASIC for short), or one or more integrated circuits that are configured to implement this embodiment of the present invention.

The processor 1001 is configured to execute the executable program code, for example, a computer program, stored in the memory 1003 to run a program that corresponds to the executable code.

The processor 1001 is specifically configured to determine, based on acquired device identity information, configuration password information, and network role attributes of at least two devices needing to be configured on a same wireless local area network (WLAN), a central node device of the WLAN.

The transmitter 1002 is configured to send device identity information and configuration password information of a non-central node device to the central node device, so that the central node device securely connects to the non-central node device according to the device identity information and the configuration password information of the non-central device; or
the transmitter 1002 is configured to send device identity information and configuration password information of the central node device to a non-central node device, so that the non-central node device securely connects to the central node device according to the device identity information and the configuration password information of the central node device, where
the non-central node device is a device of the at least two devices except the central node device.

Exemplarily, the processor 1001 is further configured to authenticate with the central node device according to configuration password information of the central node device before the transmitter 1002 sends the device identity information and the configuration password information of the non-central node device to the central node device; or
configured to authenticate with the non-central node device according to configuration password information of the non-central node device before the transmitter 1002 sends the device identity information and the configuration password information of the central node device to the non-central node device.

Specifically, the processor 1001 may perform authentication in either of the following manners:

The processor 1001 performs authentication by performing WPS interaction with the central node device or the non-central node device; or
the processor 1001 authenticates with the central node device or the non-central node device by means of four-way handshake according to the configuration password information of the central node device or the non-central node device.

Exemplarily, a network role attribute of a device includes a device type and/or a group owner intent value of the device, where the device type is used for denoting a specific type of a function of the device, such as a personal computer, a digital camera, a keyboard, a scanner, a notebook computer, or an AP.

Specifically, the processor 1001 may determine one or more central node devices of the WLAN according to the network role attributes of the at least two devices.

Exemplarily, the processor 1001 may determine the central node device of the WLAN in at least one of the following manners:
1. If the processor 1001 determines, according to the device type in the network role attribute of the device, that the device type of the device is an AP, the processor 1001 uses the device as the central node device of the WLAN, where a specific scenario is shown in FIG. 1, and the configuration device determines that a wireless access point is used as a central node and that the other wireless devices are used as non-central nodes.
2. If the processor 1001 determines, according to the device type in the network role attribute of the device, that the devices needing to be configured on the same WLAN include no AP, the configuration device determines the central node device of the WLAN according to the group owner intent value in the network role attribute of the device, where in this embodiment, that a device whose group owner intent value is greatest/smallest is used as the central node device of the WLAN is determined according to a preset rule, and is not limited herein; or
   the processor 1001 determines the central node device of the WLAN according to the device type and the group owner intent value in the network role attribute and a preset correspondence between the device type and the group owner intent value.

Exemplarily, a specific manner in which the configuration device 80 acquires the device identity information, the configuration password information, and the network role attributes of the at least two devices needing to be configured on the same WLAN is the same as or similar to the manner described in the foregoing embodiment, and is not described herein again.

Further, the processor 1001 is further configured to determine at least two central node devices of the WLAN according to the network role attributes of the devices.

Exemplarily, when the processor 1001 determines, according to the network role attributes of the devices, that there are at least two central node devices on the WLAN, there may be at least three devices needing to be configured on the same WLAN.

Correspondingly, the transmitter 1002 is further configured to send device identity information and configuration password information of a non-central node device to all the central node devices, so that the at least two central node devices securely connect to the non-central node device in a one-to-one manner according to the device identity information and the configuration password information of the non-central device; or
the transmitter 1002 is further configured to send device identity information and configuration password information of all the central node devices to a non-central node device, so that the non-central node device securely connects to the central node devices in a one-to-one manner according to the device identity information and the configuration password information that correspond to the at least two central node devices.

This embodiment of the present invention provides a configuration device 80 for configuring multiple devices, where the configuration device 80 first acquires related information of at least two devices needing to be configured on a same WLAN and determines a central node device, and then sends related information of a non-central node device to the central node device or sends related information of the central node device to a non-central node device, so that the central node device and the non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

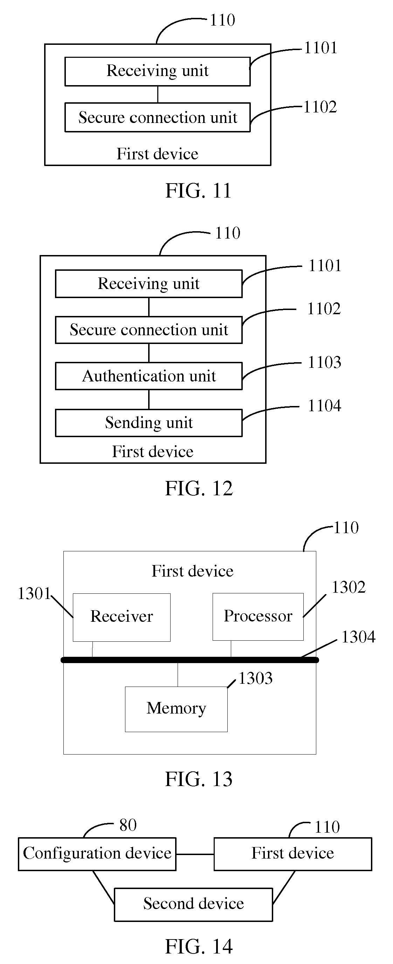

Referring to FIG. 11, FIG. 11 shows a first device 110 for configuring multiple devices according to an embodiment of the present invention, where the first device 110 may be a central node device, or may be a non-central node device, and the central node device is determined by a configuration device according to network role attributes of at least two devices. The first device 110 includes:
a receiving unit 1101, configured to receive device identity information and configuration password information of a second device that are sent by the configuration device after the configuration device acquires device identity information, configuration password information, and network role attributes of at least two devices that need to be configured on a same WLAN and that include the first device, and determines a central node device of the WLAN according to the network role attributes of the at least two devices; and
a secure connection unit 1102, configured to securely connect to the second device according to the device identity information and the configuration password information of the second device.

Exemplarily, in this embodiment, the first device may be the central node device, and the second device is any device of the at least two devices except the central node device; or
the second device may be the central node device, and the first device is any device of the at least two devices except the central node device.

Exemplarily, referring to FIG. 12, the first device 110 further includes an authentication unit 1103, configured to authenticate with the configuration device according to configuration password information of the first device acquired by the configuration device; specifically, the authentication unit 1103 is configured to:
perform authentication by performing WPS interaction with the configuration device according to the configuration password information of the first device acquired by the configuration device, where a specific authentication process is like that in the manner I described above, and is not described herein again; or
authenticate with the configuration device by means of four-way handshake according to the configuration password information of the first device acquired by the configuration device, where a specific authentication process is like that in the manner II described above, and is not described herein again.

Exemplarily, when the first device 110 is the central node device, the receiving unit 1101 is configured to receive device identity information and configuration password information of the non-central node device of the WLAN that are sent by the configuration device.

When the first device 110 is the non-central node device, the receiving unit 1101 is configured to receive device identity information and configuration password information of the central node device of the WLAN that are sent by the configuration device.

Exemplarily, a network role attribute of a device includes a device type and/or a group owner intent value of the device.

Exemplarily, as shown in FIG. 12, the first device 110 may further include a sending unit 1104, configured to send a configuration request message to the configuration device, where the configuration request message includes any one or more of the following: device identity information of the first device, network role attribute of the first device, and the configuration password information of the first device.

Exemplarily, after the configuration device sends the device identity information and the configuration password information of the second device to the first device, the first device performs device discovery with the second device according to the received device identity information of the second device, and the secure connection unit 1102 authenticates with and securely connects to the second device by using the configuration password information, where an authentication manner is similar to the process of the manner I or the manner II described above, and is not described herein again. After the authentication succeeds, the first device obtains security configuration information sent by the second device. By using the security configuration information, the first device may securely connect to the second device, which is like steps in the foregoing embodiment. The security configuration information may be sent after the authentication process ends, or may be sent in an authentication interaction message, or may be used as a part of the authentication process and as one of conditions for determining whether the authentication succeeds, which is not limited in the present invention either.

Further, if the configuration device determines, according to the network role attributes of the devices, that there are at least two central node devices on the WLAN, there may be at least three devices needing to be configured on the same WLAN.

If the first device is the central node device, the secure connection unit 1102 may be specifically configured to securely connect to the second device in a one-to-one manner according to the device identity information and the configuration password information of the second device. Specifically, as shown in FIG. 6, two central node devices (first devices), GO1 and GO2 separately, are provided, and the rest are non-central node devices (second devices).

The first device GO2 may receive a probe request frame sent by a wireless device 3 (the second device), and if the first device GO2 finds that the probe request frame includes no WSC IE, it indicates that the wireless device 3 (the second device) has already completed authentication with another central node device (another first device, for example, GO1); therefore, the first device GO2 does not securely connect to the wireless device 3 (the second device); and
the first device GO2 may further receive a probe request frame sent by a wireless device 4 (the second device), and if the first device GO2 finds that the probe request frame includes a WSC IE, it indicates that the wireless device 4 (the second device) has not yet completed authentication with another central node device (another first device); in this case, the first device GO2 may securely connect to the wireless device 4 (the second device).

Alternatively, if the second device is the central node device, the secure connection unit 1102 may be specifically configured to securely connect to the second device in a one-to-one manner according to the device identity information and the configuration password information that correspond to the second device. Specifically, as shown in FIG. 6, two central node devices (second devices), GO1 and GO2 separately, are provided, and the rest are non-central node devices (first devices).

A wireless device 3 (the first device) may send a probe request frame to the second device GO2, and if the second device GO2 finds that the probe request frame includes no WSC IE, it indicates that the wireless device 3 (the first device) has already completed authentication with another central node device (another second device, for example, GO1); therefore, the wireless device 3 (the first device) does not securely connect to the second device GO2; and
moreover, a wireless device 4 (the first device) may also send a probe request frame to the second device GO2, and if the second device GO2 finds that the probe request frame includes a WSC IE, it indicates that the wireless device 4 (the first device) has not yet completed authentication with another central node device (another second device); in this case, the wireless device 4 (the first device) may securely connect to the second device GO2.

This embodiment of the present invention provides a first device 110 for configuring multiple devices, where a configuration device first acquires related information of at least two devices needing to be configured on a same WLAN and determines a central node device, and then sends related information of a second device to the first device, so that the central node device and a non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

Referring to FIG. 13, FIG. 13 is a hardware apparatus diagram of a first device 110 for configuring multiple devices according to an embodiment of the present invention, where the first device 110 may be a central node device, or may be a non-central node device, and the central node device is determined by a configuration device according to network role attributes of at least two devices. The first device 110 may include: at least one receiver 1301, at least one processor 1302, a memory 1303, and at least one communications bus 1304 that is configured to implement connection and mutual communication between these apparatuses.

The communications bus 1304 may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus 1304 may be classified into an address bus, a data bus, a control bus, and the like. For convenience of denotation, in FIG. 13, only one thick line is used for denotation, but it does not mean that there is only one bus or one type of buses.

The memory 1303 is configured to store executable program code, where the program code includes a computer operation instruction. The memory 1303 may include a high-speed RAM memory, or may further include a non-volatile memory (non-volatile memory), for example, at least one magnetic disk storage.

The processor 1302 may be a central processing unit (Central Processing Unit, CPU for short), or an application specific integrated circuit (Application Specific Integrated Circuit, ASIC for short), or one or more integrated circuits that are configured to implement this embodiment of the present invention.

The processor 1302 is configured to execute the executable program code, for example, a computer program, stored in the memory 1303 to run a program that corresponds to the executable code.

The receiver 1301 is configured to receive device identity information and configuration password information of a second device that are sent by a configuration device after the configuration device acquires device identity information, configuration password information, and network role attributes of at least two devices that need to be configured on a same WLAN and that include the first device, and determines a central node device of the WLAN according to the network role attributes of the at least two devices; and
the processor 1302 is specifically configured to control, according to the device identity information and the configuration password information of the second device, the first device 110 to securely connect to the second device, where
the first device may be the central node device, and the second device is any device of the at least two devices except the central node device; or
the second device may be the central node device, and the first device is any device of the at least two devices except the central node device.

Exemplarily, before the receiver 1301 receives the device identity information and the configuration password information of the second device that are sent by the configuration device, the processor 1302 is further configured to:
authenticate with the configuration device according to configuration password information of the first device 110 acquired by the configuration device, which specifically includes:
   performing, by the processor 1302, authentication by performing WPS interaction with the configuration device according to the configuration password information of the first device acquired by the configuration device; or
   authenticating, by the processor 1302, with the configuration device by means of four-way handshake according to the configuration password information of the first device acquired by the configuration device.

Exemplarily, when the first device 110 is the central node device, the receiving, by the receiver 1301, the device identity information and the configuration password information of the second device that are sent by the configuration device includes:
receiving, by the receiver 1301, device identity information and configuration password information of a non-central node device of the WLAN that are sent by the configuration device.

When the first device 110 is the non-central node device, the receiving, by the receiver 1301, the device identity information and the configuration password information of the second device that are sent by the configuration device includes:
receiving, by the receiver 1301, device identity information and configuration password information of a central node device of the WLAN that are sent by the configuration device.

Exemplarily, a network role attribute of a device includes a device type and/or a group owner intent value of the device.

Exemplarily, the processor 1302 authenticates with the configuration device according to the configuration password information of the first device acquired by the configuration device, where an authentication manner is similar to the process of the manner I or the manner II described above, and is not described herein again. After the authentication succeeds, the first device 110 obtains security configuration information sent by the second device. By using the security configuration information, the first device 110 may securely connect to the second device, which is like steps in the foregoing embodiment. The security configuration information may be sent after the authentication process ends, or may be sent in an authentication interaction message, or may be used as a part of the authentication process and as one of conditions for determining whether the authentication succeeds, which is not limited in the present invention either.

Further, if the configuration device determines, according to the network role attributes of the devices, that there are at least two central node devices on the WLAN, there may be at least three devices needing to be configured on the same WLAN.

If the first device is the central node device, the processor 1302 is specifically configured to securely connect to the second device in a one-to-one manner according to the device identity information and the configuration password information of the second device. Specifically, as shown in FIG. 6, two central node devices (first devices), GO1 and GO2 separately, are provided, and the rest are non-central node devices (second devices).

The first device GO2 may receive a probe request frame sent by a wireless device 3 (the second device), and if the first device GO2 finds that the probe request frame includes no WSC IE, it indicates that the wireless device 3 (the second device) has already completed authentication with another central node device (another first device, for example, GO1); therefore, the first device GO2 does not securely connect to the wireless device 3 (the second device); and
the first device GO2 may further receive a probe request frame sent by a wireless device 4 (the second device), and if the first device GO2 finds that the probe request frame includes a WSC IE, it indicates that the wireless device 4 (the second device) has not yet completed authentication with another central node device (another first device); in this case, the first device GO2 may securely connect to the wireless device 4 (the second device).

Alternatively, if the second device is the central node device, the processor 1302 is specifically configured to securely connect to the second device in a one-to-one manner according to the device identity information and the configuration password information that correspond to the second device. Specifically, as shown in FIG. 6, two central node devices (second devices), GO1 and GO2 separately, are provided, and the rest are non-central node devices (first devices).

A wireless device 3 (the first device) may send a probe request frame to the second device GO2, and if the second device GO2 finds that the probe request frame includes no WSC IE, it indicates that the wireless device 3 (the first device) has already completed authentication with another central node device (another second device, for example, GO1); therefore, the wireless device 3 (the first device) does not securely connect to the second device GO2; and
moreover, a wireless device 4 (the first device) may also send a probe request frame to the second device GO2, and if the second device GO2 finds that the probe request frame includes a WSC IE, it indicates that the wireless device 4 (the first device) has not yet completed authentication with another central node device (another second device); in this case, the wireless device 4 (the first device) may securely connect to the second device GO2.

This embodiment of the present invention provides a first device 110 for configuring multiple devices, where a configuration device first acquires related information of at least two devices needing to be configured on a same WLAN and determines a central node device, and then sends related information of a second device to the first device, so that the central node device and a non-central node device may be securely connected, directly after acquiring related information of the other party, according to the acquired related information of the other party, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

Referring to FIG. 14, FIG. 14 shows a system 140 for configuring multiple devices according to an embodiment of the present invention, including: the configuration device 80 according to either of the foregoing embodiments, the first device 110 according to either of the foregoing embodiments, and a second device needing to be configured on a same WLAN as the first device.

This embodiment of the present invention provides a system 140 for configuring multiple devices, where a configuration device 80 of the system first acquires related information of at least two devices needing to be configured on a same WLAN and determines a central node device, and then sends related information of a second device to a first device 110, so that the central node device and multiple non-central node devices are securely connected, thereby implementing simple and secure configuration on multiple devices in a centralized manner. This simplifies a configuration process and reduces a configuration time compared with the prior art in which when multiple devices needing to be added are configured, these devices needing to be added need to be configured one by one according to steps in the WPS specification.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

It should be noted that, in this application, the "first" and "second" are only used for distinguishing, and have no specific meaning.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for configuring multiple devices, comprising:
acquiring, by a configuration device, device identity information, configuration password information, and network role attributes of at least two devices needing to be configured on a same wireless local area network WLAN;
determining, by the configuration device, a central node device of the WLAN according to the network role attributes of the at least two devices; and
sending, by the configuration device, device identity information and configuration password information of a non-central node device to the central node device, so that the central node device securely connects to the non-central node device according to the device identity information and the configuration password information of the non-central device; or sending, by the configuration device, device identity information and configuration password information of the central node device to the non-central node device, so that the non-central node device securely connects to the central node device according to the device identity information and the configuration password information of the central node device, wherein
the non-central node device is a device of the at least two devices except the central node device.

2. The method according to claim 1, wherein before the sending device identity information and configuration password information of a non-central node device to the central node device, the method further comprises:
authenticating, by the configuration device, with the central node device according to configuration password information of the central node device; or
before the sending device identity information and configuration password information of the central node device to the non-central node device, the method further comprises:
authenticating, by the configuration device, with the non-central node device according to configuration password information of the non-central node device.

3. The method according to claim 1 or 2, wherein the network role attribute of the device comprises a device type and/or a group owner intent value of the device.

4. The method according to claim 3, wherein the determining, by the configuration device, a central node device of the WLAN according to the network role attributes of the at least two devices comprises:
if the configuration device determines, according to the device type in the network role attribute of the device, that the device type of the device is a wireless access point AP, using the device as the central node device of the WLAN.

5. The method according to claim 3, wherein the determining, by the configuration device, a central node device of the WLAN according to the network role attributes of the at least two devices comprises:
if the configuration device determines, according to the device type in the network role attribute of the device, that the devices needing to be configured on the same WLAN comprise no AP, determining, by the configuration device, the central node device of the WLAN according to the group owner intent value in the network role attribute of the device; or
determining, by the configuration device, the central node device of the WLAN according to the device type in the network role attribute and a preset correspondence between the device type and the group owner intent value.

6. A method for configuring multiple devices, comprising:
receiving, by a first device, device identity information and configuration password information of a second device that are sent by a configuration device after the configuration device acquires device identity information, configuration password information, and network role attributes of at least two devices that need to be configured on a same wireless local area network WLAN and that comprise the first device, and determines a central node device of the WLAN according to the network role attributes of the at least two devices; and
securely connecting, by the first device, to the second device according to the device identity information and the configuration password information of the second device, wherein
the first device is the central node device, and the second device is any device of the at least two devices except the central node device; or the second device is the central node device, and the first device is any device of the at least two devices except the central node device.

7. The method according to claim 6, wherein the method further comprises: when the first device is the central node device, authenticating, by the first device, with the configuration device according to configuration password information of the first device before the first device receives the device identity information and the configuration password information of the second device that are sent by the configuration device; or
when the second device is the central node device, authenticating, by the first device, with the configuration device according to configuration password information of the first device before the first device receives the device identity information and the configuration password information of the second device that are sent by the configuration device.

8. The method according to claim 7 or 8, wherein the network role attribute of the device comprises a device type and/or a group owner intent value of the device.

9. A configuration device for configuring multiple devices, comprising:
an acquiring unit, configured to acquire device identity information, configuration password information, and network role attributes of at least two devices needing to be configured on a same wireless local area network WLAN;
a determining unit, configured to determine a central node device of the WLAN according to the network role attributes of the at least two devices; and
a sending unit, configured to send device identity information and configuration password information of a non-central node device to the central node device, so that the central node device securely connects to the non-central node device according to the device identity information and the configuration password information of the non-central device; or
configured to send device identity information and configuration password information of the central node device to the non-central node device, so that the non-central node device securely connects to the central node device according to the device identity information and the configuration password information of the central node device, wherein
the non-central node device is a device of the at least two devices except the central node device.

10. The configuration device according to claim 9, wherein the network role attribute of the device comprises a device type and/or a group owner intent value of the device.

11. The configuration device according to claim 10, wherein the determining unit is configured to: if the determining unit determines, according to the device type in the network role attribute of the device, that the device type of the device is a wireless access point AP, use the device as the central node device of the WLAN.

12. The configuration device according to claim 10, wherein
the determining unit is specifically configured to: if the determining unit determines, according to the device type in the network role attribute of the device, that the devices needing to be configured on the same WLAN comprise no AP, determine the central node device of the WLAN according to the group owner intent value in the network role attribute of the device; or
the determining unit is specifically configured to determine the central node device of the WLAN according to the device type in the network role attribute and a preset correspondence between the device type and the group owner intent value.

13. A configuration device for configuring multiple devices, comprising:
a processor, configured to determine, based on acquired device identity information, configuration password information, and network role attributes of at least two devices needing to be configured on a same wireless local area network WLAN, a central node device of the WLAN;
a transmitter, configured to send device identity information and configuration password information of a non-central node device to the central node device, so that the central node device securely connects to the non-central node device according to the device identity information and the configuration password information of the non-central device; or
configured to send device identity information and configuration password information of the central node device to the non-central node device, so that the non-central node device securely connects to the central node device according to the device identity information and the configuration password information of the central node device, wherein
the non-central node device is a device of the at least two devices except the central node device.

14. The configuration device according to claim 13, wherein the network role attribute of the device comprises a device type and/or a group owner intent value of the device.

15. The configuration device according to claim 14, wherein the processor is specifically configured to: based on the acquired device identity information, configuration password information, and network role attributes of the at least two devices needing to be configured on the same wireless local area network WLAN,
if the processor determines, according to the device type in the network role attribute of the device, that the device type of the device is a wireless access point AP, use the device as the central node device of the WLAN.

16. The configuration device according to claim 14, wherein the processor is specifically configured to: based on the acquired device identity information, configuration password information, and network role attributes of the at least two devices needing to be configured on the same wireless local area network WLAN,
if the processor determines, according to the device type in the network role attribute of the device, that the devices needing to be configured on the same WLAN comprise no AP, determine, by the configuration device, the central node device of the WLAN according to the group owner intent value in the network role attribute of the device; or determine the central node device of the WLAN according to the device type in the network role attribute and a preset correspondence between the device type and the group owner intent value.

17. A first device for configuring multiple devices, comprising:
a receiving unit, configured to receive device identity information and configuration password information of a second device that are sent by a configuration device after the configuration device acquires device identity information, configuration password information, and network role attributes of at least two devices that need to be configured on a same wireless local area network WLAN and that comprise the first device, and determines a central node device of the WLAN according to the network role attributes of the at least two devices; and
a secure connection unit, configured to securely connect to the second device according to the device identity information and the configuration password information of the second device, wherein the first device is the central node device, and the second device is any device of the at least two devices except the central node device; or the second device is the central node device, and the first device is any device of the at least two devices except the central node device.

18. The first device according to claim 17, wherein the first device further comprises:
an authentication unit, configured to: when the first device is the central node device, authenticate with the configuration device according to configuration password information of the first device before the receiving unit receives the device identity information and the configuration password information of the second device that are sent by the configuration device; or configured to: when the second device is the central node device, authenticate with the configuration device according to configuration password information of the first device before the receiving unit receives the device identity information and the configuration password information of the second device that are sent by the configuration device.

19. The first device according to claim 17 or 18, wherein the network role attribute of the device comprises a device type and/or a group owner intent value of the device.

20. A first device for configuring multiple devices, comprising:
a receiver, configured to receive device identity information and configuration password information of a second device that are sent by a configuration device after the configuration device acquires device identity information, configuration password information, and network role attributes of at least two devices that need to be configured on a same wireless local area network WLAN and that comprise the first device, and determines a central node device of the WLAN according to the network role attributes of the at least two devices; and
a processor, configured to control, according to the device identity information and the configuration password information of the second device, the first device to securely connect to the second device, wherein the first device is the central node device, and the second device is any device of the at least two devices except the central node device; or the second device is the central node device, and the first device is any device of the at least two devices except the central node device.

21. The first device according to claim 20, wherein the network role attribute of the device comprises a device type and/or a group owner intent value of the device.

22. A system for configuring multiple devices, comprising the configuration device according to any one of claims 9 to 12, the first device according to any one of claims 17 to 19, and a second device needing to be configured on a same WLAN as the first device; or
comprising the configuration device according to any one of claims 13 to 16, the first device according to claim 20 or 21, and a second device needing to be configured on a same WLAN as the first device.
